# EUROPÄISCHE PATENTANMELDUNG

(11) **EP 2 293 019 A1**
(43) Veröffentlichungstag der Anmeldung: **09.03.2011**
(21) Anmeldenummer: 10173429.1
(22) Anmeldetag: 19.08.2010
(51) Int. Cl.: G01C 21/34, G01C 21/36

(54) **Verfahren zum Betrieb eines Navigationssystems**

(30) Priorität: 02.09.2009 DE 102009039694
(71) Anmelder: Navigon AG, 20251 Hamburg (DE)
(72) Erfinder: Katzer, Jochen, D-91605 Bergtshofen (DE)
(74) Vertreter: von den Steinen, Axel

(57) **Zusammenfassung**

Die Erfindung betrifft ein Verfahren zum Betrieb eines Navigationssystems umfassend eine Routenberechnungseinheit zum Berechnen einer Bewegungsroute von einem Startpunkt (01) zu einem Zielpunkt (02), zumindest eine Ausgabeeinrichtung, zumindest eine Eingabeeinrichtung, eine digitale Karte, in der ein geographisches Gebiet durch eine Vielzahl von Streckensegmenten beschrieben ist, und anhand derer die Routenberechnung erfolgt, und eine Zulassungsdatenbank, in der zu jedem zulassungsbeschränkten Streckensegment (9, 13, 14, 15, 16, 17), zu dessen Befahren eine Zulassungsvoraussetzung erfüllt sein muss, zumindest eine dem zulassungsbeschränkten Streckenabschnitt zugeordnete Zulassungsoption abgespeichert werden kann, wobei die Zulassungsoption die Eigenschaften des zugeordneten Streckensegments (9, 13, 14, 15, 16, 17) bezüglich einer Routenberechnung beeinflusst,
mit den folgenden Verfahrensschritten:
a) Aktivierung einer Streclcenzulassungsbetriebsart;
b) Auslesen zumindest einer Zulassungsoption aus der Zulassungsdatenbank;
c) Ausgabe der ausgelesenen Zulassungsoption, insbesondere in Verbindung mit dem zugeordneten, zulassungsbeschränkten Streckensegment (9, 13, 14, 15, 16, 17), mittels zumindest einer Ausgabeeinrichtung;
d) Aktivierung einer Zulassungsoptionsänderungsbetriebsart, wobei eine Änderung der ausgegebenen Zulassungsoption, insbesondere durch eine Eingabe des Benutzers, erfolgen kann, und wobei die Änderung der Zulassungsoption registriert wird;
e) Speichern der registrierten Zulassungsoptionsänderung in der Zulassungsdatenbank.

## Beschreibung

Die Erfindung betrifft ein Verfahren zum Betrieb eines Navigationssystems nach dem Oberbegriff des Anspruchs 1.

Gattungsgemäße Verfahren zum Betrieb eines Navigationssystems werden eingesetzt, um eine Route zwischen zwei Routenpunkten zu berechnen, und eine Routenführung zum Verfolgen der berechneten Route bereitzustellen. Bei den Routenpunkten kann es sich insbesondere um den Startpunkt und den Zielpunkt einer von einem Fahrer eines Fahrzeugs geplanten Bewegungsroute handeln. Die Berechnung der Bewegungsroute kann dabei hinsichtlich einer Vielzahl von Eigenschaften optimiert werden. Es kann beispielsweise vorgesehen sein, dass die Routenberechnung derart angepasst ist, eine Bewegungsroute zu liefern, die hinsichtlich ihrer Streckenlänge oder hinsichtlich der zum Verfolgen der Bewegungsroute benötigten Zeit optimiert ist. Zudem kann eine Routenberechnung erfolgen, die das Befahren bestimmter Straßenklassen vorsieht oder unterdrückt.

Bekannte Verfahren zum Betrieb eines Navigationssystems sind ferner dazu eingerichtet, zulassungsbeschränkte Strecken bzw. Streckensegmente bei der Routenberechnung zu berücksichtigen oder auszuschließen. Bei den zulassungsbeschränkten Streckensegmenten handelt es sich dabei um Streckensegmente, zu deren Nutzung eine Zulassungsvoraussetzung erfüllt sein muss. Dazu gehören beispielsweise mautpflichtige Autobahnen, mautpflichtige Brücken oder Tunnel und Umweltzonen innerhalb deutscher Städte, wobei die Zulassungsvoraussetzung für die letztgenannten zulassungsbeschränkten Streckensegmente in einer fahrzeugabhängigen, insbesondere abgasabhängigen, Zulassungsvoraussetzung und nicht in einer monetären Zulassungsvoraussetzung besteht. Andere zulassungsbeschränkte Streckensegmente verbinden eine zeitliche Zulassungsbeschränkung mit einer fahrzeugabhängigen Zulassungsbeschränkung. So gibt es beispielsweise Strecken, die zu bestimmten Tageszeiten oder an bestimmten Wochentagen für den Lkw- bzw. Schwerlastverkehr gesperrt sind.

Trotz dieser Vielzahl von Zulassungsvoraussetzungen bzw. unterschiedlichen Arten von zulassungsbeschränkten Streckensegmenten sehen gattungsgemäße Verfahren zum Betrieb von Navigationssystemen lediglich eine einheitliche Berücksichtigung von zulassungsbeschränkten Streckensegmenten bei der Routenberechnung vor. Mit anderen Worten ausgedrückt ist es dem Benutzer bzw. dem Fahrer eines Fahrzeugs nur möglich, zulassungsbeschränkte Streckensegmente für Routenberechnungen pauschal zuzulassen oder auszuschließen.

Eine derartige Anpassung des Routenberechnungsprozesses ist aber mit einer Vielzahl von Nachteilen verknüpft. Der größte dieser Nachteile besteht darin, dass die bekannten Verfahren äußerst unflexibel bezüglich der Verwendung zulassungsbeschränkter Streckensegmente bei der Routenberechnung sind. Es ist daher nicht möglich, einmalige, für einen begrenzten Zeitraum gültige oder sonstige Ausnahmen für die Verwendung zulassungsbeschränkter Streckensegmente zu definieren. Im Einzelfall kann dies dazu führen, dass der Benutzer entweder Gefahr läuft eine empfindliche Strafgebühr entrichten zu müssen, wenn zulassungsbeschränkte Streckensegmente fälschlicherweise bei der Routenberechnung zugelassen werden, oder dass der Benutzer unnötige Umwege in Kauf nehmen muss, wenn zulassungsbeschränkte Streckensegmente fälschlicherweise für die Routenberechnung ausgeschlossen werden. Diese Nachteile treten insbesondere im Ausland zu Tage, wo oftmals wenig oder keine Ortskenntnis eines Benutzers vorhanden ist, so dass dieser auf die vom Navigationssystem berechnete Bewegungsroute und die zum Verfolgen dieser Route ausgegebenen Anweisungen angewiesen ist.

Ausgehend von diesem Stand der Technik ist es deshalb Aufgabe der vorliegenden Erfindung, ein neues Verfahren zum Betrieb eines Navigationssystems vorzuschlagen, das die Nachteile des vorbekannten Stands der Technik vermeidet.

Die Aufgabe wird durch ein Verfahren nach der Lehre des Anspruchs 1 gelöst.

Vorteilhafte Ausführungsformen der Erfindung sind Gegenstand der Unteransprüche.

Grundüberlegung des erfindungsgemäßen Verfahrens ist es, dass jedem zulassungsbeschränkten Streckensegment, zu dessen Befahren eine Zulassungsvoraussetzung erfüllt sein muss, einer digitalen Karte, in der ein geographisches Gebiet durch eine Vielzahl von Streckensegmenten beschrieben ist, eine Zulassungsoption zugewiesen werden kann, die dann individuell für jedes zulassungsbeschränkte Streckensegment die Eigenschaften bezüglich einer Routenberechnung beeinflusst. Dabei ist vorgesehen, dass ein Navigationssystem, welches mit dem erfindungsgemäßen Verfahren betrieben wird, eine Zulassungsdatenbank umfasst, in der zu jedem zulassungsbeschränkten Streckensegment zumindest eine Zulassungsoption gespeichert werden kann.

Dabei soll gegeben sein, dass die zumindest eine Zulassungsoption dem jeweiligen zulassungsbeschränkten Streckensegment zugeordnet werden kann. Dazu bieten sich eine Vielzahl von Möglichkeiten an, wie beispielsweise das Kennzeichnen aller Streckensegmente der digitalen Karte mittels einer Identifikationsnummer, wobei die Identifikationsnummer eines zulassungsbeschränkten Streckensegments zusammen mit der Zulassungsoption in der Zulassungsdatenbank gespeichert wird. Aber auch Verfahren, die Zeiger oder Vektoren zur Verknüpfung von Zulassungsoptionen der Zulassungsdatenbank mit den jeweiligen Streckensegmenten verwenden, können Anwendung finden.

Das erfindungsgemäße Verfahren sieht vor, dass in einem ersten Verfahrensschritt eine Streckenzulassungsbetriebsart aktiviert wird. Die Aktivierung kann durch verschiedene Ereignisse ausgelöst werden und kann beispielsweise durch eine Ausgabe des Navigationssystems begleitet werden, die dem Benutzer die Aktivierung der Streckenzulassungsbetriebsart mitteilt. In einem anschließenden Verfahrensschritt des erfindungsgemäßen Verfahrens wird zumindest eine Zulassungsoption aus der Zulassungsdatenbank ausgelesen. Optional kann dabei vorgesehen sein, dass neben der Zulassungsoption auch das zulassungsbeschränkte Streckensegment mittels der oben beschriebenen Verknüpfung mit der Zulassungsoption aus einer entsprechenden Datenbank ausgelesen wird.

In einem dritten Verfahrensschritt wird anschließend die ausgelesene Zulassungsoption mittels zumindest einer Ausgabeeinrichtung ausgegeben. Auch die Ausgabe der Zulassungsoption kann in Kombination mit der Ausgabe des zugeordneten zulassungsbeschränkten Streckensegments erfolgen. Die Ausgabe kann beispielsweise mittels einer optischen Anzeigeeinrichtung, insbesondere einem Bildschirm, und/oder mittels einer akustischen Ausgabeeinrichtung ausgegeben werden. An die Ausgabe schließt sich ein Verfahrensschritt an, in dem eine Zulassungsoptionsänderungsbetriebsart aktiviert wird, wobei eine Änderung der ausgegebenen Zulassungsoption, insbesondere durch eine Eingabe des Benutzers, erfolgen kann, und wobei die Änderung der Zulassungsoption registriert wird. Die Zulassungsoptionsänderung kann bevorzugt mittels einer Eingabeeinrichtung des Navigationssystems, wie beispielsweise einem Touchscreen oder einem Mikrophon, erfolgen. In einem abschließenden Verfahrensschritt des erfindungsgemäßen Verfahrens werden die registrierten Zulassungsoptionsänderungen in der Zulassungsdatenbank gespeichert.

Mit dem erfindungsgemäßen Verfahren zum Betrieb eines Navigationssystems kann also der Einfluss eines jeden zulassungsbeschränkten Streckensegments auf eine Routenberechnung individuell über die jeweilige Zulassungsoption definiert werden. Weiter ermöglicht das erfindungsgemäße Verfahren, dass der Benutzer die Zulassungsoption eines zulassungsbeschränkten Streckensegments abrufen und gegebenenfalls ändern kann, um eine Routenberechnung derart zu beeinflussen, dass die berechnete Bewegungsroute eine optimale, problem- und gefahrlose Routenführung zu dem gewünschten Zielpunkt ermöglicht. Die Vorteile des erfindungsgemäßen Verfahrens kommen insbesondere dann zum Tragen, wenn die zu berechnende Bewegungsroute durch ein geographisches Gebiet, wie beispielsweise mehrere Länder, führt, in dem unterschiedliche Zulassungsvoraussetzungen für unterschiedliche Streckensegmente gelten. Ein unbeabsichtigtes Ausschließen von bestimmten zulassungsbedingten Streckensegmenten oder das unbeabsichtigte Zulassen zulassungsbeschränkter Streckensegmente wird durch das erfindungsgemäße Verfahren ausgeschlossen.

Eine vorteilhafte Ausführungsform des erfindungsgemäßen Verfahrens sieht vor, dass zulassungsbeschränkte Streckensegmente, die die gleiche Zulassungsvoraussetzung aufweisen, zu einem zulassungsbeschränkten Streckennetz zusammengefasst werden können, wobei die Änderung der Zulassungsoption eines in einem zulassungsbeschränkten Streckennetz enthaltenen Streckensegments zu einer entsprechenden Änderung der Zulassungsoption aller Streckensegmente des zulassungsbeschränkten Streckennetzes führen kann. Eine derartige identische Zulassungsvoraussetzung für eine Vielzahl zulassungsbeschränkter Streckensegmente stellt beispielsweise das Entrichten einer zugangsbezogenen Gebühr dar, mit der das Recht auf Zugang bestimmter Straßen erworben wird, ohne dass es auf die tatsächliche Nutzung ankommt. Dies gilt beispielsweise für die Autobahnen in Österreich oder in der Schweiz, für die der Erwerb einer Vignette die Zulassungsvoraussetzung darstellt. Da mit dem Erwerb einer Vignette die Zulassungsvoraussetzung für ein gesamtes zulassungsbeschränktes Streckennetz erfüllt ist, ist es besonders vorteilhaft, wenn die Änderung der Zulassungsoption eines im zulassungsbeschränkten Netz enthaltenen Streckensegments, beispielsweise das Zulassen eines Streckensegments für eine Routenplanung, sich in gleicher Weise auf alle anderen Streckensegmente des Streckennetzes auswirkt. Dadurch können die Änderungen von Zulassungsoptionen, insbesondere die durch Benutzereingabe erfolgten Zulassungsoptionsänderungen, minimiert werden. Dies steigert den Benutzungskomfort eines mit dem erfindungsgemäßen Verfahren betriebenen Navigationssystems erheblich.

Alternativ oder additiv kann vorgesehen sein, dass zulassungsbeschränkte Streckensegmente, die unterschiedliche Zulassungsvoraussetzungen voraussetzen, aber durch eine identische Streckenart und/oder einen gemeinsamen geographischen Zusammenhang miteinander verknüpft sind, zu einem zulassungsbeschränkten Streckennetz zusammengefasst werden können, wobei die Änderung der Zulassungsoption eines in einem zulassungsbeschränkten Streckennetz enthaltenen Streckensegments zu einer entsprechenden Änderung der Zulassungsoption aller Streckensegmente des zulassungsbeschränkten Streckennetzes führen kann. Unterschiedliche Zulassungsvoraussetzungen, bei denen ein Zusammenfassen zulassungsbeschränkter Streckensegmente zu einem Streckennetz sinnvoll ist, sind beispielsweise das Entrichten nutzungsabhängiger Gebühren. So werden beispielsweise auf französischen Autobahnen abhängig von der tatsächlichen Nutzung Mautgebühren an Mautstellen verlangt. Auch wenn die Zulassungsvoraussetzung in Form einer nutzungsabhängigen Gebühr je nach zulassungsbeschränktem Streckensegment unterschiedlich ausfallen kann, so kann es für den Benutzer trotzdem überaus vorteilhaft sein, wenn derartige Streckensegmente zu einem zulassungsbeschränkten Streckennetz zusammengefasst und Änderungen in den Zulassungsoptionen einheitlich für alle Streckensegmente vorgenommen werden. Insbesondere für Bewegungsrouten zu einem Zielpunkt in beträchtlicher Entfernung vom Startpunkt ist es überaus plausibel anzunehmen, dass ein Benutzer in einem bestimmten geographischen Gebiet, wie beispielsweise einem Land, nicht lediglich ein zulassungsbeschränktes Streckensegment einer Streckenart, wie beispielsweise eine Autobahn, für eine Routenberechnung zulassen möchte, dies aber für andere zulassungsbeschränkte Streckensegmente der gleichen Streckenart im gleichen geographischen Bereich nicht möchte. Letztlich führt also ein derartiges Zusammenfassen zulassungsbeschränkter Streckensegmente mit unterschiedlichen Zulassungsvoraussetzungen ebenfalls zu einem erhöhten Benutzungskomfort eines mit dem erfindungsgemäßen Verfahren betriebenen Navigationssystems.

Es kann ebenfalls vorgesehen sein, dass für Streckensegmente, die zu einem zulassungsbeschränkten Streckennetz zusammengefasst sind, nur eine Zulassungsoption in der Zulassungsdatenbank gespeichert wird. Die Speicherung einer Zulassungsoption für ein zusammengefasstes Streckennetz verringert den für die Zulassungsdatenbank benötigten Speicherbedarf erheblich. Dabei ist lediglich vorzusehen, dass eine Zulassungsoption mit mehreren Streckensegmenten, insbesondere mit allen Streckensegmenten eines zulassungsbeschränkten Streckennetzes, verknüpfbar ist. Auch wenn die Speicherung einer Zulassungsoption für ein gesamtes zulassungsbeschränktes Streckennetz generell für alle Streckennetze angewendet werden kann, so bietet dies sich besonders für Streckennetze an, deren Streckensegmente eine identische Zulassungsvoraussetzung aufweisen. Da für solche Streckennetze in der Regel eine Zugangsberechtigung für alle Streckensegmente erlangt werden kann, beispielsweise durch den Erwerb einer Vignette, gibt es keinen Bedarf für eine auf einzelne Streckensegmente differenzierte Speicherung von Zulassungsoptionen.

Einer Zulassungsoption können grundsätzlich beliebig viele, unterschiedliche Werte bzw. Zustände zugewiesen werden. Besonders vorteilhaft für das erfindungsgemäße Verfahren ist es jedoch, wenn einer Zulassungsoption zumindest Werte bzw. Zustände zugewiesen werden können, die zum Ausschluss des zugeordneten Streckensegments bei Routenberechnungen oder zur Zulassung des zugeordneten Streckensegments bei Routenberechnungen führen. Weiter ist es besonders vorteilhaft, wenn einer Zulassungsoption ein Wert bzw. Zustand zugewiesen werden kann, der einen undefinierten Zustand bezüglich Routenberechnungen darstellt.

Die Art und Weise, in der die Zustände bzw. Werte einer Zulassungsoption gespeichert werden und in der sie die Eigenschaften zu zugeordneten Streckensegmenten bei Routenberechnungen beeinflussen, ist grundsätzlich beliebig. Es kann jedoch vorgesehen sein, dass einer Zulassungsoption ein numerischer Wert zugewiesen wird, der als Faktor in die Berechnung von Wegkosten für die entsprechenden Streckensegmente einfließt, die wiederum die Grundlage der Berechnung einer optimierten Bewegungsroute bilden können. Einer Zulassungsoption, die zur Zulassung des zugeordneten Streckensegments der Routenberechnung führt, kann somit beispielsweise der Wert 1 zugewiesen werden, so dass die Wegkosten des zugeordneten Streckensegments durch eine Multiplikation mit der Zulassungsoption nicht verändert werden. Einer Zulassungsoption, die hingegen zum Ausschluss des zugeordneten Streckensegments bei Routenberechnungen führt, kann hingegen ein Wert zugewiesen werden, der deutlich größer als 1 ist. Durch Multiplikation der Wegkosten des zugeordneten Streckensegments mit der Zulassungsoption werden die Wegkosten deutlich erhöht, was dazu führt, dass das zugeordnete Streckensegment bei Routenberechnung gemieden bzw. ausgeschlossen wird, da die Berechnung einer Bewegungsroute vielfach auf der Minimierung der Gesamtwegkosten aller Streckensegmente zwischen dem Start- und dem Zielpunkt basiert.

Es sei jedoch darauf hingewiesen, dass das erfindungsgemäße Verfahren nicht notwendigerweise vorsieht, dass die Änderung einer Zulassungsoption durch den Benutzer in der Eingabe eines derartigen numerischen Werts besteht. Vielmehr ist vorgesehen, dass Zulassungsoptionen in der Form von Werten oder Zuständen an den Benutzer ausgegeben und vom Benutzer eingegeben werden, die deren Einfluss auf die Routenberechnung beschreiben bzw. erkennen lassen und lediglich bei der internen Speicherung und/oder Weiterverarbeitung im Navigationssystem durch einen numerischen Wert repräsentiert werden.

Je nachdem, welchem zulassungsbeschränkten Steckensegment eine Zulassungsoption zugeordnet ist, kann es vorteilhaft sein, wenn die Zulassungsoption bzw. ein der Zulassungsoption zugewiesener Wert permanent oder für einen begrenzten Zeitraum in der Zulassungsdatenbank gespeichert wird. Eine zeitlich begrenzte Speicherung der Zulassungsoption bietet sich beispielsweise an, wenn die Zulassungsvoraussetzung im Erwerb einer Vignette besteht, die die Zulassung zu den zulassungsbeschränkten Streckensegmenten für eine bestimmte Zeitdauer gestattet. Durch die zeitlich begrenzte Speicherung der Zulassungsoption kann sichergestellt werden, dass zulassungsbeschränkte Streckensegmente lediglich in dem Zeitraum für Routenberechnungen berücksichtigt werden, in dem die Zulassungsvoraussetzung erfüllt, also beispielsweise die Vignette gültig ist. Eine permanente Speicherung einer Zulassungsoption bzw. eines einer Zulassungsoption zugewiesenen Wertes bietet sich an, wenn der Nutzer des Navigationssystems aufgrund bestimmter Begebenheiten auf die Nutzung einzelner zulassungsbeschränkter Streckensegmente oder ganzer zulassungsbeschränkter Streckennetze angewiesen ist. Dies kann gegeben sein, wenn ein Benutzer seinen Wohnort oder Arbeitsplatz beispielsweise nur durch das Überqueren einer mautpflichtigen Brücke erreichen kann.

Gemäß einer bevorzugten Ausführungsform des erfindungsgemäßen Verfahrens wird einer Zulassungsoption, die für einen begrenzten Zeitraum in der Zulassungsdatenbank gespeichert wird, nach Ablauf des begrenzten Zeitraums ein undefinierter Zustand bezüglich Routenplanungen zugewiesen. Dadurch wird verhindert, dass ein zulassungsbeschränktes Streckensegment, welches für einen begrenzten Zeitraum für Routenberechnungen zugelassen war, nach Ablauf des begrenzten Zeitraums automatisch von Routenberechnungen ausgeschlossen wird. Die Zuweisung eines undefinierten Zustands bezüglich der Routenplanung nach Ablauf des begrenzten Zeitraums ermöglicht hingegen, dass die Zulassungsoption des zugeordneten Streckensegments erneut überprüft wird. Sollte die Zulassungsvoraussetzung weiter erfüllt sein, beispielsweise durch den Erwerb einer neuen Vignette, kann die Zulassungsoption weiter erfüllt sein. In einem solchen Fall kann die Zulassungsoption von dem undefinierten Zustand bezüglich Routenberechnungen wieder in den das Streckensegment zulassenden Zustand geändert werden, wodurch weiterhin optimale Routenberechnungen bezüglich zulassungsbeschränkter Streckensegmente erfolgen bzw. Routenberechnungen, die unnötige Umwege um zulassungsbeschränkte Streckensegmente enthalten, vermieden werden können.

Für Zulassungsoptionen, für die ein Wert nur während einer begrenzten Zeitspanne in der Zulassungsdatenbank gespeichert wird, kann in besonders vorteilhafter Weise vorgesehen sein, dass vor und/oder zu und/oder nach dem Ablauf des begrenzten Zeitraums eine Ausgabe erfolgt, die auf die begrenzte Gültigkeit einer Zulassungsoption bzw. des Zustands einer Zulassungsoption hinweist. Dadurch kann der Benutzer weitere Fahrten vorausschauend planen, indem er entweder die entsprechende Zulassungsvoraussetzung weiter bzw. neu erfüllt und somit auch die Gültigkeit des Zustands der Zulassungsoption verlängern bzw. erneuern kann oder indem er sich für aktuelle bzw. bevorstehende Fahrten auf längere Bewegungsrouten einstellt, die durch das Vermeiden zulassungsbeschränkter Strecken, für die die Zulassungsvoraussetzung nicht oder nicht mehr erfüllt ist oder erfüllt sein wird, entstehen.

Handelt es sich bei dem Navigationssystem, welches durch das erfindungsgemäße Verfahren betrieben wird um ein mobiles Navigationssystem, so kann es besonders vorteilhaft sein, wenn in der Zulassungsdatenbank benutzerabhängige und/oder fahrzeugabhängige, aktivierbare Zulassungsprofile gespeichert sind, wobei ein Zulassungsprofil eine Zulassungsoption für jedes Streckensegment der Zulassungsdatenbank umfassen kann und wobei das Auslesen von Zulassungsoptionen zulassungsbeschränkter Streckenelemente in Abhängigkeit eines aktivierten Zulassungsprofils erfolgt. Mobile Navigationssysteme kommen mitunter in einer Vielzahl von Fahrzeugen zum Einsatz, welche jeweils unterschiedliche Zulassungsvoraussetzungen für zulassungsbeschränkte Streckensegmente erfüllen. Beispielsweise kann ein Navigationssystem einerseits in einem Fahrzeug zum Einsatz kommen, welches eine Autobahnvignette für die Schweiz besitzt und aufgrund der Abgasuntersuchung alle deutschen Umweltzonen befahren darf. Andererseits kann das gleiche Navigationssystem in einem Fahrzeug zum Einsatz kommen, welches nicht über eine Autobahnvignette verfügt und nicht in deutsche Umweltzonen einfahren darf. Um einerseits Strafgebühren für das Nichterfüllen von Zulassungsvoraussetzungen zu vermeiden und andererseits gleichermaßen optimale Routenführung in den beiden beispielhaften Fahrzeugen zu gewährleisten, ist es deshalb besonders vorteilhaft, wenn für jedes der beispielhaften Fahrzeuge ein Zulassungsprofil in der Zulassungsdatenbank gespeichert ist. Dabei kann während des Betriebs des Navigationssystems jeweils ein Zulassungsprofil aktiviert werden, wobei die Zulassungsoptionen des jeweils aktivierten Zulassungsprofils vom erfindungsgemäßen Verfahren, insbesondere mit den entsprechenden zulassungsbeschränkten Streckensegmenten, ausgelesen und für Routenberechnungen berücksichtigt werden. Die Aktivierung des Zulassungsprofils kann beispielsweise nach Einschalten des Navigationssystems durch eine Abfrage erfolgen, in der der Benutzer das jeweils aktuell benutzte Fahrzeug durch eine Eingabe auswählt.

Das erfindungsgemäße Verfahren sieht in einer vorteilhaften Ausführungsform vor, dass die Aktivierung der Streckenzulassungsbetriebsart erfolgt, wenn als Ergebnis einer Routenberechnung eine initiale Bewegungsroute erstellt wurde, die zumindest ein zulassungsbeschränktes Streckensegment umfasst, dessen Zulassungsoption einen undefinierten Zustand bezüglich Routenberechnung darstellt. Dies ermöglicht, vor dem Erstellen einer endgültigen Bewegungsroute zum Zielpunkt, eine Änderung der Zulassungsoption zulassungsbeschränkter Streckensegmente, die in einer errechneten Bewegungsroute enthalten sind und deren Zustand undefiniert bezüglich Routenberechnung ist. Mit anderen Worten ausgedrückt bedeutet dies, dass eine initiale Bewegungsroute zu einem Zielpunkt nur dann als endgültige Bewegungsroute übernommen wird, wenn für die darin enthaltenen zulassungsbeschränkten Streckensegmente die zugeordneten Zulassungsoptionen zum Zulassen der Streckensegmente führen. Es ist also nicht nötig, dass ein Benutzer vor dem Auslösen einer Routenberechnung die Änderung der Zulassungsoption aller eventuell infrage kommender zulassungsbeschränkter Streckensegmente vornimmt, da das Vorhandensein eines zulassungsbeschränkten Streckensegments in einer Bewegungsroute, dessen Zulassungsoption einen undefinierten Zustand bezüglich Routenberechnung darstellt, zur Aktivierung der Streckenzulassungsbetriebsart führt und den Benutzer vor Abschluss der endgültigen Routenberechnung die Möglichkeit gibt, Änderungen an den Zulassungsoptionen bzw. den Zuständen von Zulassungsoptionen vorzunehmen.

Diesbezüglich ist es besonders vorteilhaft, wenn alle Zulassungsoptionen zulassungsbeschränkter Streckensegmente, die einen undefinierten Zustand bezüglich Routenberechnung aufweisen und in einer Bewegungsroute einer Routenberechnung enthalten sind, aus der Zulassungsdatenbank ausgelesen werden. Eine Route ausgehend von einem Startpunkt in Deutschland über Frankreich zu einem Zielpunkt in Spanien kann je nach den Einstellungen der Zulassungsdatenbank äußerst unterschiedliche initiale Bewegungsrouten hervorbringen. Es soll angenommen werden, dass ein Benutzer eines Navigationssystems, welches mit dem erfindungsgemäßen Verfahren betrieben wird, vor der Initialisierung einer derartigen Routenberechnung keine Änderungen der Zulassungsoptionen für Autobahnen bzw. Nationalstraßen in Frankreich und Spanien vorgenommen hat. Dementsprechend würde eine initiale Bewegungsroute zum Zielpunkt eine Vielzahl von zulassungsbeschränkten Streckensegmenten in Frankreich und Spanien umfassen, bei denen die Zulassungsoptionen einen undefinierten Zustand bezüglich Routenberechnungen darstellen. Durch das Auslesen und die darauffolgende Ausgabe aller Zulassungsoptionen zulassungsbeschränkter Streckensegmente, die einen undefinierten Zustand bezüglich Routenberechnung darstellen, wird der Benutzer im vorliegenden Beispiel darauf aufmerksam gemacht, dass ein Großteil der initial berechneten Bewegungsroute über zulassungsbeschränkte Streckensegmente verläuft. Durch das erfindungsgemäße Verfahren ist der Benutzer jedoch in die Lage versetzt, durch Änderung der Zulassungsoptionen bzw. deren Zustände die initiale Bewegungsroute zu beeinflussen, um zu einer, nach seinen Wünschen bezüglich der Verwendung zulassungsbeschränkter Straßensegmente optimierten Bewegungsroute zum Zielpunkt zu gelangen.

Dabei ist es besonders vorteilhaft, wenn die Routenberechnung fortgesetzt bzw. neu angestoßen wird, wenn die Änderung zumindest einer Zulassungsoption registriert wird, die einem Streckensegment zugeordnet ist, das in einer Bewegungsroute einer Routenberechnung enthalten ist. Ist beispielsweise ein Streckensegment eines mautpflichtigen Tunnels in einer initial berechneten Bewegungsroute zum Zielpunkt enthalten und das Navigationssystem registriert eine Änderung der Zulassungsoption, die dazu führt, dass das entsprechende Streckensegment von Routenberechnungen ausgeschlossen werden soll, so bleibt beispielsweise die Möglichkeit, den Tunnel durch das Benutzen einer Passstraße zu umfahren. Deshalb ist es sinnvoll, die Routenberechnung bereits dann fortzusetzen bzw. neu anzustoßen, wenn durch Änderung der Zulassungsoption das Befahren des mautpflichtigen Tunnels ausgeschlossen wird, unabhängig davon, ob die initial berechnete Bewegungsroute weitere zulassungsbeschränkte Streckensegmente enthält, deren zugeordnete Zulassungsoptionen sich ebenfalls in einem undefinierten Zustand bezüglich Routenberechnungen befinden und für die dementsprechend ebenfalls eine Änderung der Zulassungsoptionen möglich wäre. Im vorgenannten Beispiel kann das Neuanstoßen bzw. Fortsetzen der Routenberechnung nach dem Ausschluss des Tunnelstreckensegments zur Berechnung einer neuen, vorläufigen Bewegungsroute führen, die keine weiteren oder von der vorherigen Bewegungsroute abweichenden zulassungsbeschränkten Streckensegmente mit undefiniertem Zustand der Zulassungsoption bezüglich Routenberechnungen enthält. Dadurch werden, wenn überhaupt, nur Änderungen von Zulassungsoptionen nötig und möglich, die in der jeweils aktuell berechneten, vorläufigen Bewegungsroute enthalten sind.

Um die Interaktionsvorgänge zwischen Navigationssystem und Benutzer während des Routenberechnungsvorgangs möglichst gering zu halten, ist es besonders vorteilhaft, wenn die Aktivierung der Streckenzulassungsbetriebsart erfolgt, wenn eine Zulassungsübersichtsbetriebsart aktiviert wird, wobei die Zulassungsübersichtsbetriebsart unabhängig von einer Routenplanung aktiviert wird und insbesondere das Auslesen aller Zulassungsoptionen aus der Zulassungsdatenbank vorsieht. Beispielsweise kann vorgesehen sein, dass eine Zulassungsübersichtsbetriebsart automatisch bei der Erstbenutzung des Navigationssystems aktiviert wird, um die Vorlieben des Benutzers bezüglich der Verwendung zulassungsbeschränkter Streckensegmente für zukünftige Routenberechnungen abzufragen. Außerdem ist es vorteilhaft, wenn die Zulassungsübersichtbetriebsart vom Benutzer aktiviert werden kann, um umfassende Änderungen in den Zulassungsoptionen vorzunehmen. Dies kann beispielsweise der Fall sein, wenn ein neues Zulassungsprofil angelegt wird.

Um die Übersichtlichkeit der Ausgabe des erfindungsgemäßen Verfahrens zu steigern, ist es besonders vorteilhaft, wenn die Ausgabe der Zulassungsoptionen bei aktivierter Zulassungsübersichtsbetriebsart bevorzugt zusammengefasst bezüglich zulassungsbeschränkter Streckennetze erfolgt. Dabei kann verständlicherweise auch vorgesehen sein, dass die etwaige Ausgabe von Zulassungsoptionen zugeordneter Streckensegmente ebenfalls zu Streckennetzen zusammengefasst erfolgt. Es ist beispielsweise nicht sinnvoll, bei der Ausgabe aller Zulassungsoptionen bei aktivierter Zulassungsübersichtsbetriebsart jedes Streckensegment, welches einer österreichischen Autobahn zugeordnet ist, separat auszugeben. Es ist jedoch ungleich sinnvoller, eine Ausgabe zu generieren, in der alle zulassungsbeschränkten Streckensegmente, die österreichischen Autobahnen zugeordnet sind und durch eine gemeinsame Zulassungsoption des zulassungsbeschränkten Streckennetzes verknüpft sind, zusammengefasst an den Benutzer ausgegeben werden.

Die Art und Weise, in der die Ausgabe einer ausgelesenen Zulassungsoption mit oder ohne das zugeordnete Streckensegment erfolgt, ist grundsätzlich beliebig. Besonders vorteilhaft kann die Ausgabe jedoch mittels eines Text-to-Speech-Verfahrens akustisch erfolgen. Dadurch wird die visuelle Aufmerksamkeit eines Benutzers bei der Ausgabe von Zulassungsoptionen zulassungsbeschränkter Streckensegmente nicht in Anspruch genommen, wodurch die Verkehrssicherheit insbesondere dann erhöht wird, wenn derartige Ausgaben erfolgen, während der Benutzer aktiv in eine Fahrzeugführung eingebunden ist.

Auch die Änderung einer Zulassungsoption kann grundsätzlich beliebig erfolgen. Neben der Änderung einer Zulassungsoption durch eine manuelle Eingabe an einer manuellen Eingabeeinrichtung, insbesondere einem Touch-Screen, ist es besonders vorteilhaft, wenn die Änderung einer Zulassungsoption durch eine akustische Eingabe des Benutzers erfolgen kann. Auch diese Verfahrensvariante steigert die Verkehrssicherheit, da der Benutzer zur Änderung einer Zulassungsoption weder sein Augenmerk auf eine manuelle, graphische Eingabeeinrichtung richten muss, noch durch eine manuelle Eingabe in seiner Bewegungsfreiheit, insbesondere bezüglich der Fahrzeugführung, eingeschränkt wird.

Verschiedene Aspekte des erfindungsgemäßen Verfahrens sind in den Zeichnungen schematisch dargestellt und werden nachfolgend beispielhaft erläutert.

Es zeigen:
- Fig. 1: eine schematische Darstellung einer Bewegungsroute durch verschiedene Länder und Situationen mit zulassungsbeschränk- ten Streckensegmenten;
- Fig. 2: eine schematische Darstellung einer Route sowie zwei Alterna- tivrouten zur Umgehung zulassungsbeschränkter Streckenseg- mente;
- Fig. 3: eine schematische Darstellung einer Anzeigeeinrichtung bei aktivierter Zulassungsoptionsänderungsbetriebsart;
- Fig. 4: eine schematische Darstellung einer Anzeigeeinrichtung bei aktivierter Zulassungsübersichtsbetriebsart.

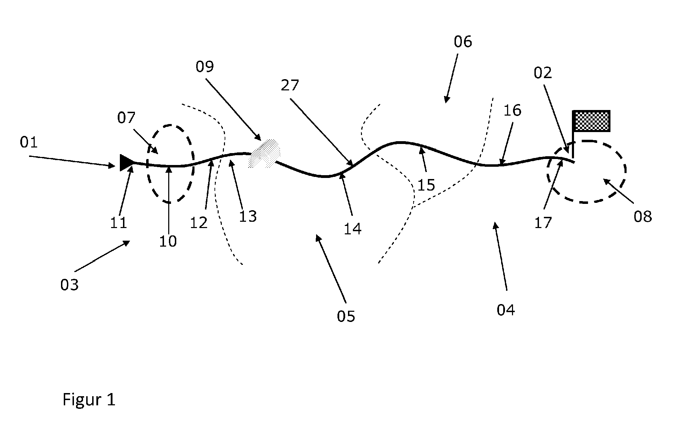

Fig. 1 zeigt eine initiale Bewegungsroute 27 von einem Startpunkt 01 zu einem Zielpunkt 02 als Ergebnis einer Routenberechnung einer Routenberechnungseinheit. Die Bewegungsroute 27 führt dabei vom Ausgangsland 3 in das Zielland 4 und durchquert dabei die Transitländer 5 und 6. Im Ausgangsland 3 durchquert die initiale Bewegungsroute 27 das Stadtgebiet 7 und im Zielland 4 das Stadtgebiet 8. Im Transitland 5 durchquert die Initialroute den Tunnel 9. Beim Stadtgebiet 07 handelt es sich um eine Umweltzone, was bedeutet, dass es sich beim Streckensegment 10 um ein zulassungsbeschränktes Streckensegment handelt und die Zulassungsvoraussetzung im Besitz einer entsprechenden Umweltplakette für das Fahrzeug besteht. Für die Streckensegmente 11 und 12 des Ausgangslands besteht keine Zulassungsvoraussetzung. Die Streckensegmente 13 und 14 im Transitland 5 sind Autobahnabschnitte, auf denen die Zulassungsvoraussetzung in Form einer nutzungs- bzw. streckenabhängigen Maut besteht. Auch der Tunnel 9 des Transitlands 5 ist mautpflichtig. Das Streckensegment 15 ist ebenfalls zulassungsbeschränkt, da es sich ebenfalls um einen Autobahnabschnitt handelt und im Transitland 6 der Erwerb einer Vignette die Zulassungsvoraussetzung zu den Autobahnen des Landes darstellt. Im Zielland 4 besteht die Zulassungsvoraussetzung zu Autobahnen im Erwerb einer Vignette und da es sich beim Streckensegment 16 ebenfalls um einen Autobahnabschnitt handelt, ist dieses Streckensegment ebenfalls zulassungsbeschränkt. Das im Stadtgebiet 8 enthaltene Streckensegment 17 der Route zum Zielpunkt ist zulassungsbeschränkt, da im Stadtgebiet 8 eine pauschale Stadtmaut erhoben wird.

Gemäß einer vorteilhaften Ausführungsform des erfindungsgemäßen Verfahrens wird die Streckenzulassungsbetriebsart aktiviert sobald eine initial berechnete Bewegungsroute 27 ein zulassungsbeschränktes Streckensegment enthält, für welches die Zulassungsoption einen undefinierten Zustand bezüglich Routenberechnungen darstellt. Im Beispiel der Fig. 1 soll davon ausgegangen werden, dass vor der Berechnung der Initialroute keinerlei Änderungen von Zulassungsoptionen vorgenommen wurden. Mit anderen Worten ausgedrückt bedeutet das, dass sich alle Zulassungsoptionen in einem undefinierten Zustand bezüglich Routenberechnungen befinden. Das hat zur Folge, dass durch die initiale Routenberechnung die Streckenzulassungsbetriebsart aktiviert und die Zulassungsoptionen der Streckensegmente 9, 10, 13, 14, 15, 16 und 17 aus der Zulassungsdatenbank ausgelesen werden.

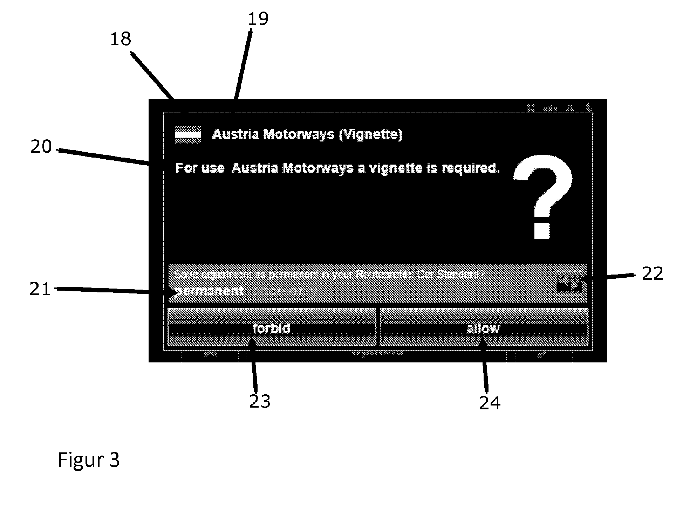

Daran schließt sich die Ausgabe der ausgelesenen Zulassungsoption und des zugeordneten Streckensegments mittels zumindest einer Ausgabeeinrichtung an. Im vorliegenden Beispiel ist eine solche Ausgabe für das zulassungsbeschränkte Streckensegment 15 des Transitlands 6 als graphische Ausgabe auf einer Anzeigeeinrichtung in Form eines Touchscreen-Displays in Fig. 3 schematisiert dargestellt. Auf der Anzeigeeinrichtung 18 verdeutlicht der Anzeigeinhalt 19, dass es sich bei dem zulassungsbeschränkten Streckensegment 15 um den Teil eines zulassungsbeschränkten Streckenetzes handelt. Deshalb beinhaltet der Anzeigeinhalt 19 keinen benennenden oder identifizierenden Inhalt für das Streckensegment 15, sondern identifizierende Inhalte für das übergeordnete, zulassungsbeschränkte Streckennetz des Transitlands 6. Der Anzeigeinhalt 20 der Anzeigeeinrichtung 18 gibt die Zulassungsvoraussetzung für das zulassungsbeschränkte Streckensegment 15 bzw. das zulassungsbeschränkte Streckennetz, in dem das Streckensegment 15 enthalten ist, an. Der Anzeigeinhalt 21 zeigt dem Benutzer an, dass das Zulassungsprofil "Car Standard" aktiviert ist. Das bedeutet, dass eine etwaige Änderung der Zulassungsoptionen des Streckensegments 15 lokal für dieses Zulassungsprofil gespeichert wird und keinen Einfluss auf möglicherweise vorhandene andere Zulassungsprofile hat. Außerdem zeigt der Anzeigeinhalt 21 durch eine graphische Hervorhebung an, dass Änderungen der Zulassungsoption für das Streckensegment 15 bzw. für das Streckennetz, in dem das Streckensegment 15 enthalten ist, permanent im Zulassungsprofil gespeichert werden. Durch den Bedienereingabeinhalt 22 erhält der Benutzer die Möglichkeit, eine Änderung der Zulassungsoption für einen begrenzten Zeitraum, insbesondere lediglich für die aktuelle Routenberechnung, in der Zulassungsdatenbank zu speichern. Schließlich hat der Benutzer mittels der Bedienereingabeinhalte 23 und 24 die Möglichkeit, eine Änderung der Zulassungsoption vorzunehmen.

Im vorliegenden Beispiel soll davon ausgegangen werden, dass der Benutzer mittels des Bedienereingabeinhalts 24 die Benutzung des zulassungsbeschränkten Streckensegments 15 bzw. des Streckennetzes ausschließt. Durch die Änderung der Zulassungsoptionen des Streckensegments 15 wird gemäß einer bevorzugten Ausführungsform des erfindungsgemäßen Verfahrens erneut eine Routenberechnung angestoßen bzw. die Routenberechnung weiter ausgeführt, die zur Bewegungsroute 27 geführt hat.

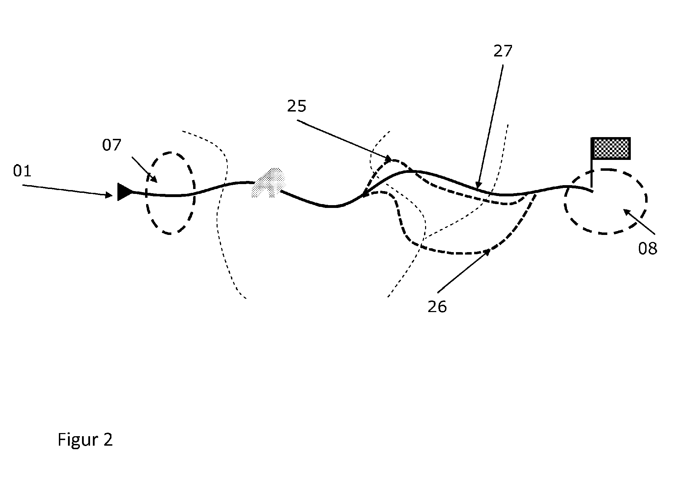

Fig. 2 zeigt ein mögliches Ergebnis des neuen bzw. weitergeführten Routenberechnungsprozesses. Durch die Änderung der Zulassungsoption des zulassungsbeschränkten Streckennetzwerks, in dem das Steckensegment 15 enthalten ist, liefert die erneute Routenberechnung alternative Bewegungsrouten 25 und 26 zur ursprünglichen Route 27, mit denen die Autobahnen des Transitlands 6, die die Änderung der Zulassungsoption des Streckensegments 15 ausgeschlossen hat, vermieden werden.

Die Ausgabe ausgelesener Zulassungsoptionen und zugeordneter Streckensegmente sowie die Änderung von Zulassungsoptionen können auch akustisch erfolgen. Eine beispielhafte Ausgabe für das Streckensegment 10 im Stadtbereich 7 könnte wie folgt lauten: "Die Route führt im Ausgangsland 3 durch eine Umweltzone. Haben Sie eine entsprechende Umweltplakette?" Die akustische Eingabe "Ja" des Benutzers würde in diesem Fall in der Änderung der Zulassungsoption des Streckensegments 10 resultieren, wobei der Zulassungsoption ein Wert bzw. ein Zustand zugewiesen werden würde, der zur Zulassung des Streckensegments 10 für Routenberechnungen führt. Da die Zulassungsvoraussetzung für alle Streckensegmente des Stadtgebiets 7 identisch ist, können die Streckensegmente des Stadtgebiets 7 zu einem zulassungsbeschränkten Streckennetz zusammengefasst werden. In diesem Fall ist es vorteilhaft, wenn die Änderung der Zulassungsoption für das Streckensegment 10 eine dementsprechende Änderung der Zulassungsoption der anderen Streckensegmente im Streckennetz des Stadtgebiets 7 nach sich zieht. Die alternative akustische Benutzereingabe "Nein" würde in einer Änderung der Zulassungsoption resultieren, die die Zulassung des Streckensegments 10 bzw. des Streckennetzes des Stadtgebiets 7 von Routenberechnungen ausschließt.

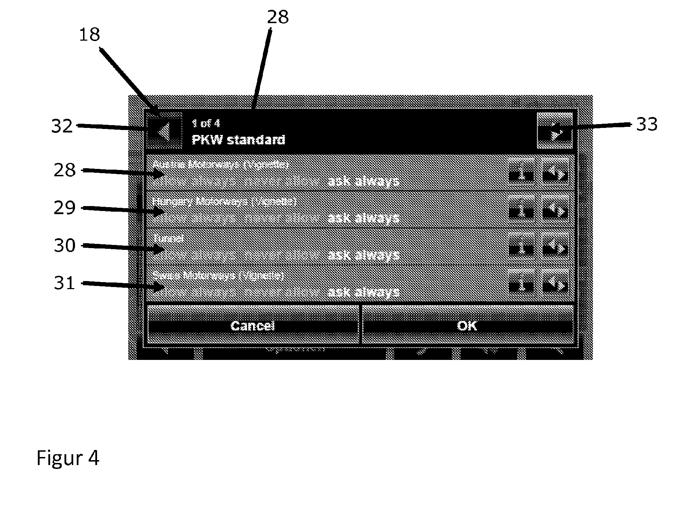

Fig. 4 zeigt die Ausgabe auf einer Anzeigeeinrichtung 18, die das erfindungsgemäße Verfahren erzeugt, wenn die Aktivierung einer Zulassungsübersichtsbetriebsart zur Aktivierung der Zulassungsänderungsbetriebsart geführt hat. Sinn der Zulassungsübersichtsbetriebsart ist es, dem Benutzer einen möglichst einfachen und umfänglichen Überblick über die derzeit im Zulassungsprofil der Zulassungsdatenbank gespeicherten Zulassungsoptionen zu verschaffen. Die Zulassungsübersichtsbetriebsart wird unabhängig von einer Routenberechnung aktiviert und führt dazu, dass alle Zulassungsoptionen, bevorzugt in der Form von zusammengefassten zulassungsbeschränkten Streckennetzen, aus der Zulassungsdatenbank ausgelesen werden. Der Anzeigeinhalt 28 der Anzeigeeinrichtung 18 gibt Auskunft über das Zulassungsprofil, aus dem die Zulassungsoptionen ausgelesen wurden. Die Anzeigeinhalte 27, 29, 30 und 31 zeigen jeweils ein zulassungsbeschränktes Streckennetz, welches zusammen mit der jeweiligen Zulassungsoption angezeigt wird, die Zulassungsvorrausetzungen und den derzeitigen Wert bzw. Zustand der Zulassungsoption an. Da lediglich eine beschränkte Anzahl an Zulassungsoptionen zulassungsbeschränkter Streckensegmente bzw. zulassungsbeschränkter Streckennetze, in Verbindung mit den jeweils zugeordneten Streckensegmenten bzw. Streckennetzen, auf der Anzeigeeinrichtung 18 in Form von Anzeigeinhalten dargestellt werden kann, besteht für den Benutzer die Möglichkeit, durch die Bedienereingabeinhalte 32 und 33 weitere zulassungsbeschränkte Streckensegmente bzw. Streckennetze sowie deren Zulassungsvoraussetzung und die derzeit gespeicherte Zulassungsoption mittels der Anzeigeeinrichtung 18 angezeigt zu bekommen.

## Patentansprüche

1. Verfahren zum Betrieb eines Navigationssystems umfassend eine Routenberechnungseinheit zum Berechnen einer Bewegungsroute von einem Startpunkt (01) zu einem Zielpunkt (02), zumindest eine Ausgabeeinrichtung, zumindest eine Eingabeeinrichtung, eine digitale Karte, in der ein geographisches Gebiet durch eine Vielzahl von Streckensegmenten beschrieben ist, und anhand derer die Routenberechnung erfolgt, und eine Zulassungsdatenbank, in der zu jedem zulassungsbeschränkten Streckensegment (9, 13, 14, 15, 16, 17), zu dessen Befahren eine Zulassungsvoraussetzung erfüllt sein muss, zumindest eine dem zulassungsbeschränkten Streckenabschnitt zugeordnete Zulassungsoption abgespeichert werden kann, wobei die Zulassungsoption die Eigenschaften des zugeordneten Streckensegments (9, 13, 14, 15, 16, 17) bezüglich einer Routenberechnung beeinflusst, mit den folgenden Verfahrensschritten:
a) Aktivierung einer Streckenzulassungsbetriebsart;
b) Auslesen zumindest einer Zulassungsoption aus der Zulassungsdatenbank;
c) Ausgabe der ausgelesenen Zulassungsoption, insbesondere in Verbindung mit dem zugeordneten, zulassungsbeschränkten Streckensegment (9, 13, 14, 15, 16, 17), mittels zumindest einer Ausgabeeinrichtung;
d) Aktivierung einer Zulassungsoptionsänderungsbetriebsart, wobei eine Änderung der ausgegebenen Zulassungsoption, insbesondere durch eine Eingabe des Benutzers, erfolgen kann, und wobei die Änderung der Zulassungsoption registriert wird;
e) Speichern der registrierten Zulassungsoptionsänderung in der Zulassungsdatenbank.

2. Verfahren nach Anspruch 1,
**dadurch gekennzeichnet,**
**dass** zulassungsbeschränkte Streckensegmente (15), die die gleiche Zulassungsvoraussetzung voraussetzen, zu einem zulassungsbeschränkten Streckennetz zusammengefasst werden können, wobei die Änderung der Zulassungsoption eines in einem zulassungsbeschränkten Streckennetz enthaltenen Streckensegments (15) zu einer entsprechenden Änderung der Zulassungsoption aller Streckensegmente des zulassungsbeschränkten Streckennetzes führen kann.

3. Verfahren nach Anspruch 1 oder 2,
**dadurch gekennzeichnet,**
**dass** zulassungsbeschränkte Streckensegmente (13, 14), die unterschiedliche Zulassungsvoraussetzungen voraussetzen, aber durch eine identische Streckenart und/oder einen gemeinsamen geographischen Zusammenhang miteinander verknüpft sind, zu einem zulassungsbeschränkten Streckennetz zusammengefasst werden können, wobei die Änderung der Zulassungsoption eines in einem zulassungsbeschränkten Streckennetz enthaltenen Streckensegments (13,14) zu einer entsprechenden Änderung der Zulassungsoption aller Streckensegmente des zulassungsbeschränkten Streckennetzes führen kann.

4. Verfahren nach einem der Ansprüche 1 bis 3,
**dadurch gekennzeichnet,**
**dass** einer Zulassungsoption Zustände bzw. Werte zugewiesen werden können, die zum Ausschluss des zugeordneten Streckensegments bei Routenberechnungen oder zur Zulassung des zugeordneten Streckensegments bei Routenberechnungen führen oder einen undefinierten Zustand des Streckensegments bezüglich Routenberechnungen darstellen.

5. Verfahren nach einem der Ansprüche 1 bis 4,
**dadurch gekennzeichnet,**
**dass** Zulassungsoptionen permanent oder für einen begrenzten Zeitraum in der Zulassungsdatenbank gespeichert werden.

6. Verfahren nach Anspruch 5,
**dadurch gekennzeichnet,**
**dass** einer Zulassungsoption, die für einen begrenzten Zeitraum in der Zulassungsdatenbank gespeichert wird, nach Ablauf des begrenzten Zeitraums ein undefinierter Zustand bezüglich Routenberechnungen zugewiesen wird.

7. Verfahren nach Anspruch 5 oder 6,
**dadurch gekennzeichnet,**
**dass** vor und/oder zu und/oder nach dem Ablauf des begrenzten Zeitraums eine Ausgabe erfolgt, die auf die begrenzte Gültigkeit der Zulassungsoption hinweist.

8. Verfahren nach einem der Ansprüche 1 bis 7,
**dadurch gekennzeichnet,**
**dass** in der Zulassungsdatenbank benutzerabhängige und/oder fahrzeugabhängige, aktivierbare Zulassungsprofile gespeichert sind, wobei ein Zulassungsprofil eine Zulassungsoption für jedes zulassungsbeschränkte Streckensegment (9, 13, 14, 15, 16, 17) umfassen kann, und wobei das Auslesen von Zulassungsoptionen zulassungsbeschränkter Streckensegmente (9, 13, 14, 15, 16, 17) in Abhängigkeit des aktivierten Zulassungsprofils erfolgt.

9. Verfahren nach einem der Ansprüche 1 bis 8,
**dadurch gekennzeichnet,**
**dass** die Aktivierung der Streckenzulassungsbetriebsart erfolgt, wenn als Ergebnis einer Routenberechnung eine Bewegungsroute (27) erstellt wurde, die zumindest ein zulassungsbeschränktes Streckensegment (9, 13, 14, 15, 16, 17) umfasst, dessen zugeordnete Zulassungsoption einen undefinierten Zustand bezüglich Routenberechnungen darstellt.

10. Verfahren nach Anspruch 9,
**dadurch gekennzeichnet,**
**dass** alle Zulassungsoptionen zulassungsbeschränkter Streckensegmente (9, 13, 14, 15, 16, 17), die einen undefinierten Zustand bezüglich Routenberechnungen aufweisen und in der Bewegungsroute (27) einer Routenberechnung enthalten sind, aus der Zulassungsdatenbank ausgelesen werden.

11. Verfahren nach Anspruch 10,
**dadurch gekennzeichnet,**
**dass** die Routenberechnung fortgesetzt bzw. erneut angestoßen wird, wenn die Änderung zumindest einer Zulassungsoption registriert wird, die einem Streckensegment zugeordnet ist, das in der Bewegungsroute (27) einer Routenberechnung enthalten ist.

12. Verfahren nach einem der Ansprüche 1 bis 11,
**dadurch gekennzeichnet,**
**dass** die Aktivierung der Streckenzulassungsbetriebsart erfolgt, wenn eine Zulassungsübersichtsbetriebsart aktiviert wird, wobei die Zulassungsübersichtsbetriebsart unabhängig von einer Routenberechnung aktiviert wird und insbesondere das Auslesen aller Zulassungsoptionen aus der Zulassungsdatenbank vorsieht.

13. Verfahren nach Anspruch 12,
**dadurch gekennzeichnet,**
**dass** bei aktivierter Zulassungsübersichtsbetriebsart die Ausgabe der Zulassungsoption, insbesondere in Verbindung mit dem zugeordneten zulassungsbeschränkten Streckensegment (9, 13, 14, 15, 16, 17), bevorzugt zusammengefasst bezüglich zulassungsbeschränkter Streckennetze erfolgt.

14. Verfahren nach einem der Ansprüche 1 bis 13,
**dadurch gekennzeichnet,**
**dass** die Ausgabe einer ausgelesenen Zulassungsoption, insbesondere in Verbindung mit einem zugeordneten Streckensegment, akustisch, insbesondere mittels eines Text-to-Speech-Verfahrens (TTS-Verfahren), erfolgt.

15. Verfahren nach einem der Ansprüche 1 bis 14,
**dadurch gekennzeichnet,**
**dass** die Änderung einer Zulassungsoption durch eine akustische Eingabe des Benutzers erfolgt.
